# EUROPÄISCHE PATENTANMELDUNG

(11) **EP 3 508 874 A1**
(43) Veröffentlichungstag der Anmeldung: **10.07.2019**
(21) Anmeldenummer: 18150183.4
(22) Anmeldetag: 03.01.2018
(51) Int. Cl.: G01S 7/497, G01S 17/36

(54) **KALIBRIERVORRICHTUNG FÜR EINE TOF-KAMERAVORRICHTUNG**

(71) Anmelder: Espros Photonics AG, 7320 Sargans (CH)
(72) Erfinder: Honegger, Silvio, 8887 Mels (CH); De Coi, Beat, 7304 Maienfeld (CH)
(74) Vertreter: Otten, Roth, Dobler & Partner mbB Patentanwälte

(57) **Zusammenfassung**

Vorgeschlagen wird eine Kalibriervorrichtung (9) zum Kalibrieren einer TOF-Kameravorrichtung (10) zur Aussendung von Lichtsignalen und Aufnahme des an einem Objekt rückgestreuten Lichts sowie zur Bestimmung der Entfernung der TOF-Kameravorrichtung (10) vom Objekt (8), wobei die TOF-Kameravorrichtung einen Sender (5), einen Empfänger (2), eine Modulationseinrichtung (1), die mit dem Sender (5) verbunden ist, eine Auswerteeinrichtung (2'), die das Modulationssignal zur Auswertung und Bestimmung der Entfernung erhält. Zur Vereinfachung der Kalibrierung ist eine elektronische Kalibriereinrichtung (6) zur Ausführung eines Kalibriervorgangs vorgesehen, wobei die Kalibriereinrichtung (6) dazu ausgebildet ist, eine Verzögerungsleitung (VL) zu kontrollieren, um das Modulationssignal zeitverzögert an den Sender (5) und/oder an die Auswerteeinrichtung (2') weiterzuleiten.

## Beschreibung

Die Erfindung betrifft eine Kalibriervorrichtung zum Kalibrieren einer TOF-Kameravorrichtung nach dem Oberbegriff des Anspruchs 1 sowie eine TOF-Kamera nach dem Oberbegriff des Anspruchs 4.

Nach dem Stand der Technik werden TOF-Kameras herkömmlicherweise unter Zuhilfenahme aufwendiger Methoden kalibriert. Zu diesem Zweck werden die Kameras in speziellen, eigens dafür vorgesehenen Kalibrierstationen installiert, in denen entsprechende Kalibrierdatensätze erzeugt werden können. Diese Datensätze müssen sodann ausgewertet werden, damit die entsprechende Kamera auf der Grundlage dieser Daten neu eingestellt werden kann. Ein derartiges Verfahren ist beispielsweise aus der DE 10 2017 202 563 A1 bekannt, wobei mehrere Kalibrierstationen dazu verwendet werden.

Aufgabe der Erfindung ist es, die Kalibrierung einer TOF-Kamera vereinfachen zu können.

Die Aufgabe wird, ausgehend von einer Kalibriervorrichtung bzw. einer TOF-Kamera der eingangs genannten Art, durch die kennzeichnenden Merkmale des Anspruchs 1 bzw. des Anspruchs 4 gelöst.

Durch die in den abhängigen Ansprüchen genannten Maßnahmen sind vorteilhafte Ausführungen und Weiterbildungen der Erfindung möglich.

Die erfindungsgemäße Kalibriervorrichtung zum Kalibrieren einer TOF-Kameravorrichtung zeichnet sich dadurch aus, dass eine elektronische Kalibriereinrichtung zum Ausführen eines Kalibriervorgangs vorhanden ist, welche eine Verzögerungsleitung kontrolliert, um das Modulationssignal zeitverzögert an den Sender bzw. an die Auswerteeinrichtung bzw. den Empfänger der TOF-Kameravorrichtung weiterzuleiten.

Die TOF-Kameravorrichtung im Sinne der Erfindung dient zur Aussendung von Lichtsignalen und Aufnahme des an einem Objekt rückgestreuten Lichts sowie zur Bestimmung der Entfernung der TOF-Kameravorrichtung vom Objekt. Die Abkürzung "TOF" steht für den englischen Begriff "Time-of-flight", d.h. es handelt sich um eine Form der Laufzeitmessung. Eine entsprechende TOF-Kameravorrichtung umfasst einen Sender, mit welchem die Lichtsignale ausgesandt werden, sowie einen Empfänger, mit dem das an einem Objekt rückgestreute Licht detektiert wird. Auf diese Weise kann die Distanz zwischen Kameravorrichtung und Objekt bestimmt werden, in dem eine Art Laufzeitmessung vorgenommen wird. Eine derartige Laufzeitmessung kann zum Beispiel durch Bestimmung einer Phasenverschiebung zwischen einem ausgesandten und einem detektieren Signal erfolgen. Zu diesem Zweck umfasst eine entsprechende TOF-Kameravorrichtung eine Modulationseinrichtung zur Erzeugung eines Modulationssignals. Die Modulationseinrichtung ist zu diesem Zweck mit dem Sender verbunden und moduliert das auszusendende Lichtsignal. Beispielsweise ist das aufmodulierte Modulationssignal im Vergleich zur Lichtfrequenz (hier wird in der Regel Infrarotlicht verwandt) niederfrequent, um die Messung einer Phasenverschiebung zu erleichtern bzw. überhaupt möglich zu machen. Die Bestimmung der Phasendifferenz kann etwa über eine Korrelation vorgenommen werden.

Zur Auswertung des vom Empfänger detektierten Lichts ist eine Auswerteeinrichtung vorgesehen, welche mit der Modulationseinrichtung verbunden ist, um das Modulationssignal zur Auswertung und Bestimmung der Entfernung dort abzugreifen.

Die TOF-Kameravorrichtung kann grundsätzlich die gesamte Kamera umfassen. Sie kann aber auch lediglich die zuvor erwähnten Bauteile wie Sender, Empfänger, Modulationseinrichtung und Auswerteeinrichtung umfassen, welche gegebenenfalls auch in einem einzelnen Chip implementiert und zusammengefasst sein können.

Eine Kalibrierung bedeutet grundsätzlich, dass der mithilfe der TOF-Kameravorrichtung und deren Auswerteeinrichtung erhaltene Ausgabewert (zum Beispiel eine Spannung) für eine Entfernung steht, die mit der Vorrichtung bestimmt werden soll. Diesem Ausgabewert muss aber die korrekte Entfernung erst zugeordnet werden. Hinzu kommen bestimmte Fehlerquellen wie zum Beispiel systematische Fehler, welche auch innerhalb des Messsystems der Kameravorrichtung unterschiedlich sein können. Beispielsweise kann eine entsprechende Kameravorrichtung als Empfänger eine Pixelmatrix aufweisen, wobei die unterschiedlichen Pixel auch in unterschiedlicher Weise fehlerbehaftet sind. Ferner können statistische Fehler hinzukommen. Dies führt typischerweise dazu, dass einzelne Pixel derselben Kamera unterschiedliche Ausgabewerte liefern, bedingt durch statistische Fehler und unterschiedliche systematische Fehler. Darüber hinaus sind die Ausgabewerte aller Pixel der Pixelmatrix regelmäßig mit einem Offset versehen, d.h. sie zeigen im unkalibrierten Zustand einen Wert an, der vom eigentlich zu erwartenden Wert stets um einen festen Betrag abweicht.

Ein systematischer Fehler, der grundsätzlich bezüglich eines Empfängers auftauchen kann, ist das Auftreten eines Dunkelstroms im Empfänger bzw. in jedem der Pixel (in der Regel pro Kolonne). Gleiches gilt auch für die Analog-/ Digitalwandler. Befindet sich der entsprechende Empfänger in einer Dunkelkammer, in der absolute Dunkelheit vorherrscht, kann trotzdem ein von Null verschiedenes Signal verzeichnet werden. Ein ähnlicher Effekt kann auftreten, wenn zum Beispiel ein exakt weißes Bild detektiert wird. Da die einzelnen Empfänger bzw. die einzelnen Pixel, bedingt durch Prozess-und Fertigungstoleranzen, unterschiedliche Empfindlichkeiten aufweisen, ergeben sich auch leichte Unterschiede beim gemessenen Bild.

Es gilt also, eine Kalibrierung in Bezug auf den tatsächlich zu erwartenden Ausgabewert hin vorzunehmen und auch Ungenauigkeiten zwischen den einzelnen Bildpunkten bzw. Pixeln ausgleichen zu können.

Eine derartige Kalibrierung wurde nach dem Stand der Technik bislang in besonders aufwendiger Weise durchgeführt. Um diese Maßnahme vereinfachen zu können, sind erfindungsgemäß Verzögerungsleitungen vorgesehen, welche wie folgt eingesetzt werden: Das durch die Modulationseinrichtung erzeugte Modulationssignal wird grundsätzlich an einen Sender und an die Auswerteeinrichtung geleitet. Der Sender wiederum sendet das Signal aus, dieses wird zurückgestreut und gelangt zum Empfänger und von dort aus wieder an die Auswerteeinrichtung. Das über den Sender ausgesandte Signal gelangt also lediglich verändert und auch zeitverzögert zur Auswerteeinrichtung, sodass die entsprechende zeitliche Differenz, gegebenenfalls gemessen über eine Phasenverschiebung bestimmt werden kann. Wird aber bei der Übertragung des Modulationssignals an den Sender oder an die Auswerteeinrichtung eine Verzögerungsleitung zwischengeschaltet, so beeinflusst diese Verzögerungsleitung das Ergebnis, wie stark zeitversetzt die Signale jeweils bei der Auswerteeinrichtung ankommen. Auf diese Art und Weise kann somit eine Kalibrierung der TOF-Kameravorrichtung vorgenommen werden, weil durch die zwischengeschaltete Verzögerungsleitung der bestimmte Distanzwert ebenfalls verändert wird, was in dem Maße geschehen kann, dass Fehler oder sonstige Abweichungen von einem zu erwartenden Referenzdistanz-Wert ausgeglichen werden können.

Die Verzögerungsleitungen können grundsätzlich zwar ein Teil der Kalibriervorrichtung sein, sie können aber auch in die Kamera oder in den Kamerachip integriert sein.

Eine zu erwartende Referenzdistanz kann bereitgestellt werden, indem diese durch ein vordefiniertes Probesystem vorgegeben wird, welches durch die Kameravorrichtung vermessen wird, etwa eine Kalibierbox mit festen Ausmaßen.

Zunächst kann erfindungsgemäß die Verzögerungsleitung in die Übertragungsstrecke zwischen Modulationseinrichtung und Sender eingebaut werden. Von der Modulationseinrichtung wird das Modulationssignal sodann weiterhin ohne zusätzliche Verzögerungsleitung an die Auswerteeinrichtung geleitet. Das bedeutet, dass das über den Sender verschickte Signal nicht nur eine Verzögerung, bedingt durch die Laufzeit des Lichtsignals, erfährt, sondern bewusst durch die zwischengeschaltete Verzögerungsleitung verzögert wird, d.h. das Signal wird bereits verzögert, bevor es überhaupt am Sender ankommt. Je größer die Verzögerung durch die zwischengeschaltete Verzögerungsleitung ist, desto größer ist der Entfernungswert, der durch diese Methode letzten Endes bestimmt wird.

Umgekehrt kann auch die Verzögerungsleitung zwischen Modulationseinrichtung und Auswerteeinrichtung zwischengeschaltet sein. Dies wiederum hat zur Folge, dass sich der bestimmte Distanzwert verringert, weil die Auswerteeinheit annimmt, das Modulationssignal sei erst zu einem späteren Zeitpunkt erzeugt worden. Tatsächlich liegt in einem solchen Fall das Modulationssignal jedoch in der Regel früher am Sender an, als es der Auswerteeinrichtung zur Verfügung gestellt worden ist.

Diese Art der Kalibrierung kann über eine elektronische Kalibrierungseinrichtung gesteuert werden, welche zur Ausführung des Kalibriervorgangs zur Verfügung steht. Die Verzögerungsleitung, insbesondere der Betrag bzw. das Vorzeichen, um den eine Verzögerung des Signals vorgenommen wird, kann über die Kalibrierungseinrichtung kontrolliert werden.

Da Auswerteeinrichtung und Empfänger in einer Baueinheit grundsätzlich implementiert sein können, kann entsprechend bei einer solchen Bauweise das Modulationssignal auch auf dem Weg zwischen Modulationseinrichtung und Empfänger über eine entsprechende Verzögerungsleitung verzögert werden. Eine Implementierung in einer Baueinheit bezieht sich auf die Bereitstellung einer Vorrichtung in einem Gehäuse bzw. auf einer Schaltung als separate Komponente.

Insbesondere ist es denkbar, dass entsprechende Verzögerungsleitungen im Zusammenhang mit einer Ausführungsform einer erfindungsgemäßen Kalibriervorrichtung in beide Wege zwischengeschaltet werden, nämlich auf dem Weg des Modulationssignals zwischen Modulationseinrichtung und Sender und auf dem Weg zwischen Modulationseinrichtung und Auswerteeinrichtung bzw. Empfänger. Hierdurch kann insbesondere der Bereich zur Kalibrierung in vorteilhafter Weise erweitert werden.

Grundsätzlich sind verschiedene bauliche Ausführungsformen der Kalibriervorrichtung gemäß der Erfindung denkbar. Um zu vermeiden, dass die Kameravorrichtung bzw. die Kamera die Kalibriervorrichtung selbst beinhaltet, kann eine Schnittstelle vorgesehen sein, damit die Kalibriervorrichtung an die TOF-Kameravorrichtung angeschlossen wird, um im verbundenen Zustand die Kalibrierung durchführen zu können. Über die Schnittstelle muss die TOF-Kameravorrichtung es also ermöglichen, dass die Kalibriervorrichtung bzw. die Verzögerungsleitungen in die entsprechenden Wege zwischen Modulationseinrichtung und Sender bzw. Auswerteeinrichtung zwischengeschaltet werden. Auf diese Weise kann eine Kalibriervorrichtung für verschiedene Kameravorrichtungen verwendet werden, und die spätere Kameravorrichtung bzw. Kamera, die an den Kunden geschickt wird, muss nicht zusätzlich die Kalibriervorrichtung beinhalten und kann folglich kostengünstiger angeboten werden. Vor allem kann die TOF-Kamera bzw. TOF-Kameravorrichtung aber kleiner und kompakter gestaltet werden.

Es ist auch denkbar, dass bei einer Ausführungsform der Erfindung die kontrollierbare Verzögerungsleitung in der TOF-Kameravorrichtung implementiert ist, nicht jedoch die elektronische Kalibrierungseinrichtung. Die elektronische Kalibriereinrichtung kann über eine Schnittstelle zur Kalibrierung hinzugeschaltet werden. Auf diese Weise sind die Wegverzweigungen des Modulationssignals also in vorteilhafter Weise bereits vorgegeben, und lediglich die Ansteuerung wird von außen über die elektronische Kalibriereinrichtung kontrolliert. Das Modulationssignal muss in diesem Fall nicht gesondert aus der Baueinheit der TOF-Kameravorrichtung heraus- und wieder hineingeführt werden.

Darüber hinaus ist es denkbar, eine TOF-Kamera als Ausführungsvariante vorzusehen, die gleichzeitig auch die Kalibriervorrichtung beinhaltet. Gerade in den Fällen, in denen zum Beispiel ein besonders hohes Maß an Präzision erforderlich ist, kann diese Ausführungsvariante die Möglichkeit bieten, das über die Kamera selbst eine Kalibrierung wiederholt durchgeführt werden kann.

Bei einer vorteilhaften Weiterbildung der Erfindung weist die Verzögerungsleitung wenigstens zwei in Serie geschaltete Teilverzögerungsleitungen auf sowie ferner eine Auswahleinheit, welche das Modulationssignal am Ausgang jeder der Teilverzögerungsleitungen abgreift, sodass die mit der Auswahleinheit verbundene Kalibriereinrichtung zwischen verschiedenen zeitverzögerten Modulationssignalen auswählen kann. Auf diese Art und Weise können die verschiedenen Zeitverzögerungen und die verschiedenen Wegstrecken, welche das Modulationssignal durchlaufen muss, in einer vergleichsweise kompakten Bauform realisiert werden. Ferner ist das Umschalten zwischen verschiedenen Zeitverzögerungen durch einfache Schaltmethoden bzw. das unterschiedliche Abgreifen des Signals an unterschiedlichen Stellen möglich.

Bei einer vorteilhaften Ausführungsform der Erfindung können die Teilverzögerungsleitungen jeweils als digitale Puffer ausgebildet werden. Diese ermöglichen eine sehr definierte und präzise Verzögerung des entsprechenden Signals.

Beim Ausführungsbeispiel der Erfindung können die Teilverzögerungsleitungen jeweils als digitale Puffer ausgebildet sein, sodass definierte Verzögerungen über standardisierte Bauteile ermöglicht werden und den Fertigungsprozess erleichtern können.

Grundsätzlich kann die Kalibriereinrichtung zur analogen oder digitalen Kontrolle der Verzögerungsleitung ausgebildet sein und so grundsätzlich an verschiedene Bauarten einer Kamera angepasst werden.

Es ist aber auch möglich, die Verzögerungsleitung so zu gestalten, dass die Verzögerungszeiten, die damit realisiert werden können, nicht auf (einige wenige) diskrete Werte beschränkt sind, sondern kontinuierlich verändert werden können.

Wie bereits oben dargestellt, ist es möglich, eine Verzögerung in einer Leitung dadurch zu erreichen, dass ein elektronisches Bauteil darin eingebaut wird, welches das Signal um eine vordefinierte Zeitspanne verzögert. Insbesondere können bei Ausführungsform der Erfindung die Verzögerungsleitung und oder die Teilverzögerungsleitungen auch variabel verändert werden. Dies kann beispielsweise dadurch erreicht werden, dass die Verzögerungsleitung wenigstens einen digitalen Zähler aufweist, der mit einer Taktfrequenz arbeitet und über den Takt gesteuert werden kann. Insbesondere können derartige Taktfrequenzen wenigstens 2 GHz betragen. Auf diese Weise kann eine sehr präzise Einstellung der Zeitverzögerung vorgenommen werden.

Dementsprechend zeichnet sich die erfindungsgemäße TOF-Kamera dadurch aus, dass sie zum einen eine entsprechende TOF-Kameravorrichtung mit Sender, Empfänger, Modulationseinrichtung und Auswerteeinrichtung umfasst, insbesondere auch aber eine entsprechende erfindungsgemäße Kalibriervorrichtung bzw. eine Kalibriervorrichtung gemäß einem Ausführungsbeispiel der Erfindung. Wie bereits dargestellt, kann hierdurch eine Vereinfachung der Kalibrierung erreicht werden.

Ebenfalls wurde bereits dargestellt, dass je nach Ausführungsform der Erfindung die Kalibriervorrichtung in die TOF-Kameravorrichtung, insbesondere in ein Gehäuse der TOF Kameravorrichtung integriert sein kann, d.h. die entsprechende TOF-Kamera ist so ausgeführt, dass die Kalibriervorrichtung darin implementiert ist. Auf diese Weise kann eine Wiederholung des Kalibriervorgangs je nach Bedarf ermöglicht werden.

Die Kalibriervorrichtung kann einer Ausführungsform der Erfindung aber auch als separate Baueinheit, insbesondere mit separatem Gehäuse ausgebildet sein und lösbar mit der TOF-Kameravorrichtung über eine Schnittstelle verbindbar sein. Die TOF-Kamera kann somit gegebenenfalls auch ohne Kalibriervorrichtung ausgeliefert werden, was insbesondere einen Kostenvorteil mit sich bringt. Außerdem wird für die TOF-Kamera sodann weniger Bauraum benötigt, sodass diese kompakter gestaltet werden kann.

Eine andere Bauform besteht darin, die Verzögerungsleitung aus der Kalibriervorrichtung auszugliedern und in die TOF-Kameravorrichtung zu implementieren. Die Verzögerungsleitung ist dann bereits in der Kameravorrichtung enthalten und kann zugeschaltet werden, um das Modulationssignal über die Verzögerungsstrecke statt auf direktem Weg zum Sender und/oder zur Auswerteeinrichtung / zum Empfänger zu leiten. Diese Kontrolle über den Weg des Modulationssignals übernimmt die Kalibriereinrichtung, die über eine Schnittstelle mit der TOF-Kameravorrichtung verbunden und als separate Baueinheit ausgebildet ist. Schaltungstechnisch vorteilhaft können sämtliche Wege, die das Modulationssignal durchlaufen kann, in einer Baueinheit integriert sein, ohne dass das Modulationssignal über eine Schnittstelle aus der Baueinheit der TOF-Kameravorrichtung herausgeführt werden muss. Lediglich die Kontrolle über die Verzögerungsleitung wird von außen durch die Kalibriereinrichtung übernommen. Sie stellt damit als Schaltung einen Kompromiss zwischen einer TOF-Kamera mit integrierter Kalibrierungsvorrichtung und einer TOF-Kamera mit getrennt davon ausgebildeter Kalibriervorrichtung (einschließlich Verzögerungsleitung).

Das empfangene Licht kann platzsparend mit einer Pixelmatrix detektiert werden, wobei über die Auflösung auch gewisse Strukturen erfassbar sind.

Je nachdem, ob die Verzögerungsleitung vor den Eingang des Senders oder der Auswerteeinrichtung bzw. des Empfängers geschaltet ist, kann das Vorzeichen der Verzögerung geändert werden. Sind Verzögerungsleitungen vor den Sender und die Auswerteeinrichtung bzw. den Empfänger geschaltet, kann der Einstellungsbereich der Kalibrierung erweitert werden.

Die Kalibrierung kann insgesamt stark vereinfacht werden, weil als Vergleichsgröße lediglich eine vorbekannte Referenzdistanz angenommen werden muss. Es kann bei einer Ausführungsform der Erfindung lediglich (z.B. über eine Software) die Einstellung der Verzögerungsleitungen vorgenommen werden, um die Kalibrierung fertigzustellen.

In vorteilhafter Weise kann eine sehr präzise Kalibrierung vorgenommen werden, indem ein pixelweises Auslesen und Abgleichen vorgenommen wird. Diese Maßnahme trägt dem Umstand Rechnung, dass 'die Pixel untereinander ohne Kalibrierung in der Regel nicht die gleichen Ausgangswerte liefern.

Bei einer Ausführungsvariante sind Kalibriereinrichtung und Auswerteeinrichtung in einer Baueinheit implementiert, sodass die steuerungs- bzw. kontrollrelevanten Komponenten zusammengeführt sind.

Die TOF-Kameravorrichtung kann gemäß einer Ausführungsform der Erfindung in einem Kamerachip kompakt und platzsparend implementiert sein.

Um das empfangene Licht auf die Pixelmatrix abzubilden, kann eine Empfangsoptik in der TOF-Kamera untergebracht sein.

Bei einer besonderen Weiterbildung der Erfindung kann die Kalibrierung dazu verwendet werden, Temperatureinflüsse auszugleichen. Zum Teil sind temperaturbedingte Driftwerte für die Kameras vorbekannt, sodass zum Beispiel mit einem Temperatursensor die Temperatur unmittelbar am Chip gemessen werden kann; diese Information kann über die Kalibriereinrichtung in einen Korrekturwert umgerechnet werden.

### Ausführungsbeispiele

Ausführungsbeispiele der Erfindung sind in den Zeichnungen dargestellt und werden nachstehend unter Angabe weiterer Einzelheiten und Vorteile näher erläutert. Im Einzelnen zeigen:
- Figur 1:: eine schematische Darstellung einer TOF-Kamera gemäß der Erfindung,
- Figuren 2-4:: schematische Darstellungen unterschiedlicher Implementierungen der Kalibrierungseinrichtung in Bezug auf eine TOF-Kamera,
- Figur 5:: eine schematische Darstellung einer Verzögerungsleitung,
- Figur 6:: eine schematische Darstellung einer Kalibrierbox,
- Figur 7:: eine Darstellung einer Verzögerungsleitung mit analoger Einstellung der Verzögerung, sowie
- Figur 8:: Zeitdiagramme einzelner Signale in der Schaltung gem. Figur 7.

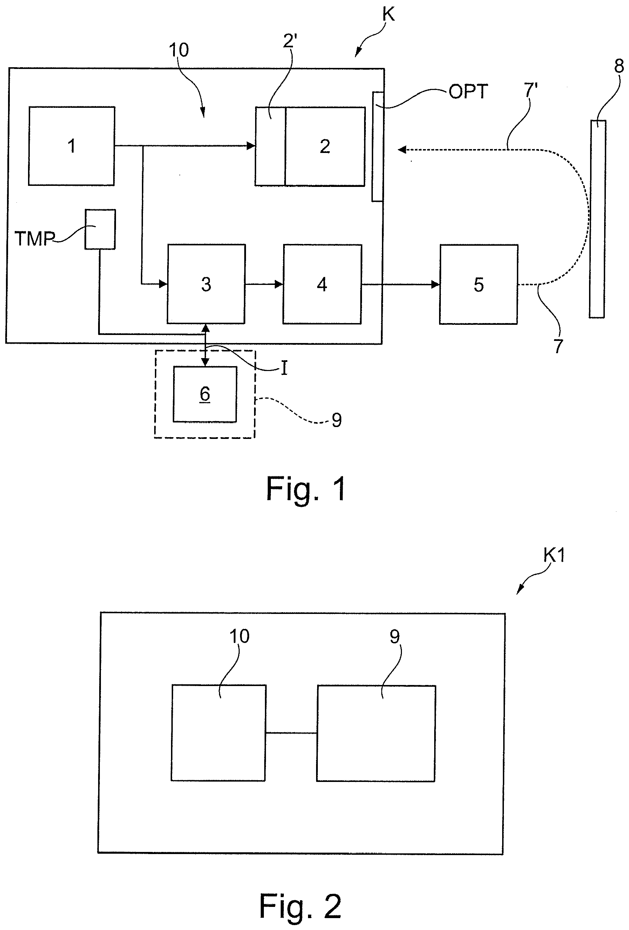

Figur 1 zeigt eine TOF-Kamera K mit einer Modulationseinrichtung 1, die ein Modulationssignal erzeugt. Dieses Modulationssignal wird zunächst auf direktem Weg an eine Auswerteeinrichtung 2' geleitet, die unmittelbar in Verbindung mit einem Empfänger 2 in Form eines Pixelfeldes steht. Das Modulationssignal wird darüber hinaus an eine Verzögerungsleitung 3 weitergeleitet, die das Signal gegebenenfalls zeitverzögert durchschleust und es an einen Beleuchtungstreiber 4 abgibt. Der Beleuchtungstreiber 4 wiederum gibt sein Signal an eine Beleuchtungseinheit 5 ab, die zum Beispiel als Laser oder als Leuchtdiode ausgebildet sein kann. Die Verzögerungsleitung 3 wird von einer Kalibriereinrichtung 6 kontrolliert. Das ausgesandte Licht 7 gelangt auf ein Objekt 8, wird gestreut und gelangt auf dem Weg 7' wiederum in die Kamera bzw. die Pixelmatrix 2 und wird dort detektiert.

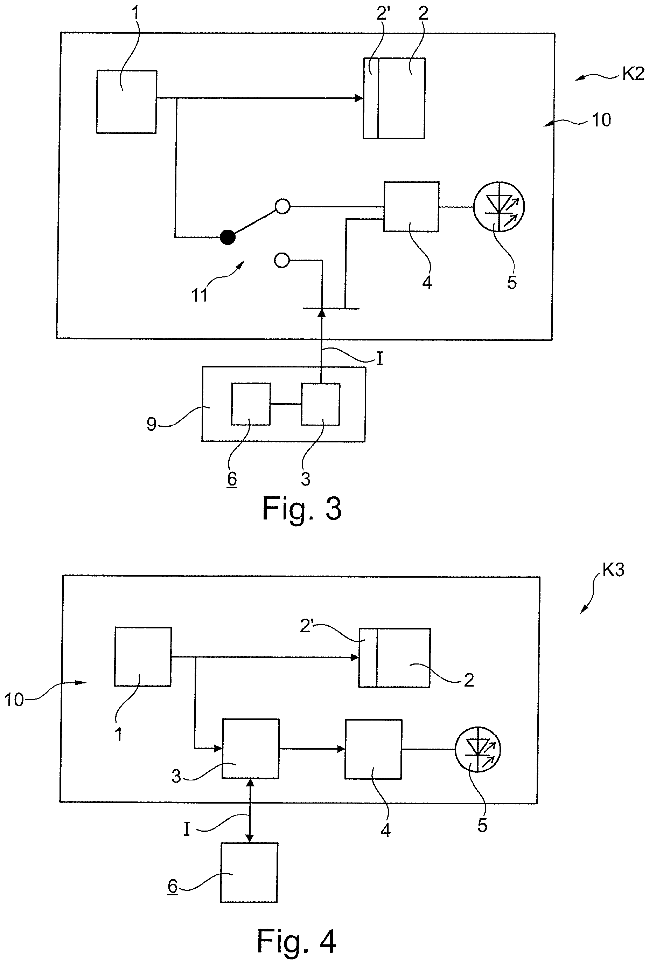

Im Strahlengang ist dem Empfänger 2 eine Empfangsoptik OPT vorgeschaltet. Verzögerungsleitung 3 und Kalibriereinrichtung 6 können zusammen, je nachdem ob sie als eine Baueinheit oder getrennt ausgebildet sind, als Kalibriervorrichtung 9 angesehen werden. Die Kameravorrichtung 10 umfasst zumindest die Modulationseinrichtung 1, den Beleuchtungstreiber 4 sowie die Beleuchtung 5, den Empfänger in Form eines Pixelfeldes 2 und die Auswerteeinrichtung 2'. Im vorliegenden Fall kann die Kamera K auch die Verzögerungsleitung 3 umfassen, die über eine Schnittstelle I mit der Kalibriereinrichtung 6 verbunden ist. Somit entspricht Figur 1 der schematischen Darstellung nach Figur 4 hinsichtlich ihres Aufbaus.

Darüber hinaus ist im Bereich der Kameravorrichtung 10 auch ein Temperatursensor TMP implementiert, der über die Schnittstelle I Messdaten bezüglich der Temperatur an der Kameravorrichtung, die als Chip ausgebildet sein kann, an die Kalibriervorrichtung 9 sendet.

Die verschiedenen Optionen, wie eine Kalibriervorrichtung bzw. die Kalibriereinrichtung in Bezug auf die Kamera angeordnet sein können, sind in den Figuren 2-4 dargestellt.

Figur 2 zeigt eine Anordnung, bei der in der Kamera K1 sowohl die TOF-Kameravorrichtung 10 als auch die Kalibriervorrichtung 9 untergebracht sind.

Gemäß Figur 3 wiederum ist in der Kamera K2 die gesamte TOF Kameravorrichtung 10 in einer Baueinheit untergebracht, die also die Modulationseinrichtung 1, die Kombination aus Empfänger und Auswerteeinrichtung 2, 2', den Beleuchtungstreiber 4 mit der Beleuchtung 5 sowie eine schaltbare Einheit 11 umfasst. Diese schaltbare Einheit 11 koppelt wiederum mit einer Schnittstelle I. Über die Schnittstelle I ist die Kamera K2 bzw. die TOF-Kameravorrichtung 10 mit der Kalibriervorrichtung 9 verbunden. Diese Kalibriervorrichtung 9 wiederum umfasst in diesem Fall sowohl die Verzögerungsleitung 3 als auch die Kalibriereinrichtung 6, die wiederum zur Kontrolle der Verzögerungsleitung 3 dient. Bei dieser Ausführungsform der Erfindung muss also über die Schaltungseinrichtung 11 umgeschaltet werden, wenn das Modulationssignal, das zur Beleuchtung 4, 5 gelangen soll, zur Kalibrierung zeitverzögert werden soll. Die Kalibriervorrichtung 9 bzw. die eigentliche Kontrolleinheit, die kalibriert Einrichtung 6 erhält die relevanten Ausgangswerte über die Auswerteeinrichtung 2'. Die kalibriert Einrichtung 6 wiederum steuert, wie das Modulationssignal aus der Modulationseinrichtung 1 zeitverzögert zum Beleuchtungstreiber 4 gelangt, indem es die Verzögerungsleitung 3 wiederum ansteuert.

In Figur 4 wiederum ist die Kamera K3 abgebildet die eine Kameravorrichtung 10 umfasst und wobei in dem Gehäuse der Kamera K3 die Modulationseinrichtung 1 der Empfänger 2 die Auswerteeinrichtung 2', der Beleuchtungstreiber 4, die Beleuchtung 5, jedoch auch die Verzögerungsleitung 3 untergebracht ist. Diese ist über eine Schnittstelle mit einer als eigene Baueinheit vorgesehenen Kalibriereinrichtung 6 verbunden. Dieses Ausführungsbeispiel entspricht im Wesentlichen dem aus Figur 1 und ist darüber hinaus die besonders bevorzugte Ausführungsform der Erfindung.

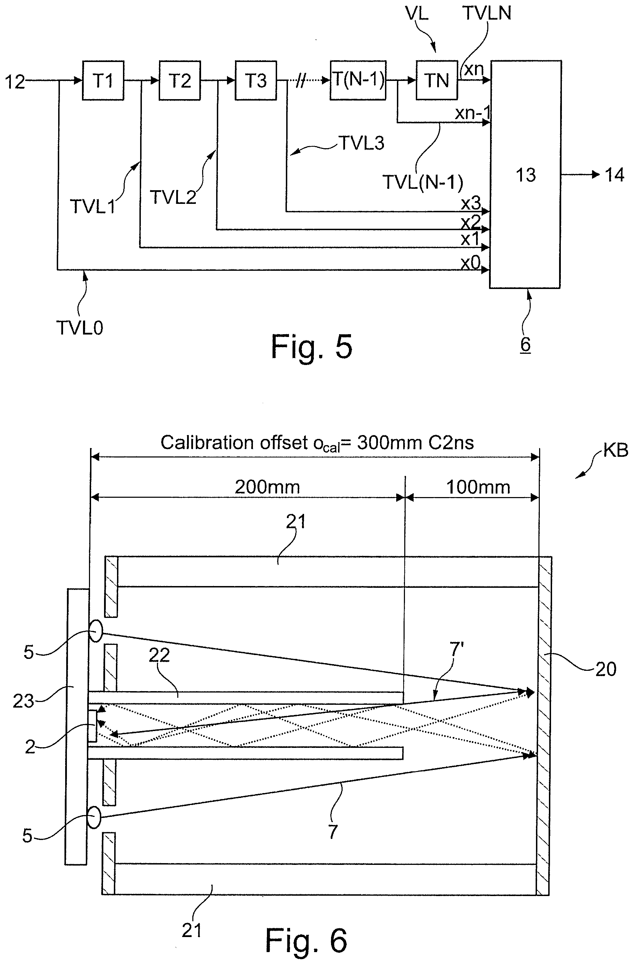

Figur 5 wiederum beschreibt eine Verzögerungsleitung VL mit verschiedenen Verzögerungsstufen T1, T2, T3, ... TN, welche in Serie geschaltet sind. Das Modulationssignal wird über den Eingang 12 eingegeben. Es kann grundsätzlich alle in Serie geschalteten Verzögerungsstufen T1, T2, ..., TN durchlaufen. Vor den Verzögerungsstufen und hinter jeder Verzögerungsstufe ist ein Abzweigungsknoten, der es ermöglicht, das Modulationssignal an der entsprechenden Stelle abzugreifen. Auf diese Weise werden die entsprechenden Teilverzögerungsleitungen TVL0, TVL1, TVL2,...TVLN gebildet. Je mehr Verzögerungsstufen T1, T2, ... TN das Signal durchlaufen hat, desto stärker ist es zeitverzögert. Alle Abzweigungen gelangen schließlich in eine Auswahleinheit 13, die zum Beispiel als Multiplexer ausgebildet ist. Der Ausgang 14 des Multiplexers 13 liefert sodann das in der Regel verzögerte Modulationssignal. Die einzelnen Verzögerungsstufen T1, T2, ... TN können als digitale Puffer ausgebildet sein, wobei das Eingangssignal 12 bereits in digitaler Form vorliegt. Bei der Abzweigungsleitung TVL0 wird das Signal nur bzw. allenfalls noch durch den Multiplexer 13 verzögert, während die Leitung TVLN bedeutet, dass alle Verzögerungsstufen ausgeschöpft werden und das Signal maximal verzögert wird.

Um eine Kalibrierung vorzunehmen, genügt die gem. Fig. 6 vorgeschlagene Kalibrierbox KB, die als Gehäuse ausgebildet ist und anstelle der Empfangsoptik an der TOF-Kameravorrichtung montierbar ist, wobei das Gehäuse einen flachen Schirm 20 aufweist, der so angeordnet ist, dass er unmittelbar vom Sender 5 beleuchtbar ist,
- wobei insbesondere das Gehäuse eine Mantelfläche 21 zum Abschirmen von Umgebungslicht aufweist und/oder
- wobei das Gehäuse eine Blende 22, die insbesondere als Röhre ausgebildet ist, aufweist, um nur einen Teil des vom flachen Schirm rückgestreuten Lichts auf den Empfänger 2 zu lassen und/oder
- wobei die Blende 22 in Einfallsrichtung vor dem Empfänger 2 senkrecht zur Pixelmatrix anordenbar ist.

Das ausgesandte Licht 7 trifft den Schirm 20 und gelangt als rückgestreutes Licht 7' zum Empfänger 2. Sender 5 und Empfänger 2 sind auf einer Platine 23 (PCB: printed-circuit board) aufgebracht. Die fest vorgegebene Referenzdistanz entspricht hier dem Abstand zwischen dem Sender 5 bzw. Platine 23 und dem Schirm 20.

Die Kalibrierbox KB hat also die Aufgabe, das durch den Sender 5 erzeugte Licht so auf den Empfänger 2 zurück zu streuen, dass alle Pixel in der Pixelmatrix 2 dieselbe oder annähernd dieselbe Lichtmenge erhalten (flat-field illumination) und der Lichtweg für alle Pixel dieselbe Länge aufweist.

Im Grunde genügt die einmalige Montage der Kalibrierbox KB, um eine vollständige Kalibrierung der Kamera bzw. der Kameravorrichtung vorzunehmen und die Pixel aufeinander abzugleichen.

Entsprechend kann ein Verfahren zur Kalibrierung einer TOF-Kameravorrichtung durch folgende Verfahrensschritte durchgeführt werden:
- Kalibrierung der Distanzmessungen über die Kalibrierungseinrichtung zum Ausgleich relativer Unterschiede zwischen den einzelnen Pixeln der Pixelmatrix,
- Kompensierung eines temperaturbedingten Drift über die Kalibriereinrichtung und/oder die Einrichtung zur Kontrolle der Temperatur,
- Kalibrierung des absoluten Wertes der bestimmten Entfernung durch Einstellung eines Offset-Wertes für alle Pixel,
wobei insbesondere die Verfahrensschritte für jeden Pixel der Pixelmatrix durchgeführt werden.

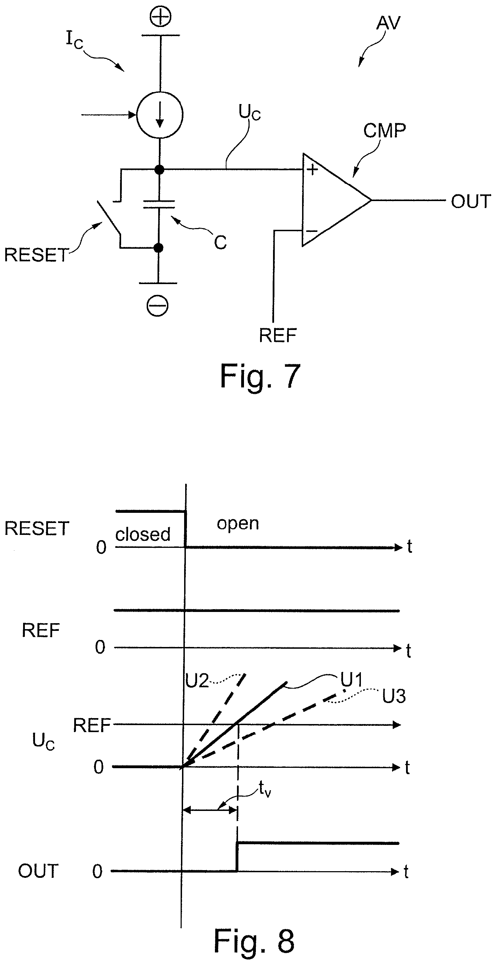

Bei einer Ausführungsform der Erfindung kann die Verzögerungsleitung auch eine analoge Verzögerungseinrichtung umfassen, wie dies in den Figuren 7 und 8 beispielhaft dargestellt ist. Der Signalverlauf in Figur 8 über der Zeitachse t dargestellt. Hierbei wird eine kontrollierbare Stromquelle Ic eingesetzt, welche eine Flanke eines digitalen Signals, insbesondere das Reset-Signal, verzögert. In Figur 7 vergleicht der Komparator (Operationsverstärker) CMP ein Spannungssignal Uc mit einem Referenzsignal REF. Der Reset-Schalter RESET stellt im geschlossenen Zustand (in Fig. 8 dargestellt als Anfangszustand: closed) eine Überbrückung zum entsprechenden Komparatoreingang dar, und das am Komparator CMP anliegende Signal Uc ist praktisch Null, im Unterschied zu dem an dem anderen Komparatoreingang anliegenden Referenzsignal REF, welches über die Zeit t konstant bleibt (vgl. Fig 8). Der Ausgang OUT des Komparators CMP zeigt also ebenfalls Null als Signal (vgl. Fig. 8). Wird der Reset-Schalter geöffnet (Fig. 8: open), fließt ein durch eine Stromquelle Ic kontrollierter Strom I_{c} in den Kondensator C und lädt diesen kontinuierlich auf. Je mehr der Kondensator C geladen ist, desto höher ist die am Komparator CMP anliegende Spannung Uc. Wenn die Spannung Uc höher als die Referenzspannung REF wird, gibt der Komparator CMP ein von Null verschiedenes Signal an seinem Ausgang OUT aus, und zwar zum Zeitpunkt tv. Dieses Signal ist um eine definierte Zeitspanne tv verzögert zum eigentlichen Modulationssignal, welche am Reset-Schalter anliegt.

Durch eine Veränderung der Stromstärke I_{c} wird der Kondensator C rascher (bei höherem Strom I_{c}) oder langsamer (bei niedrigerem Strom I_{c}) aufgeladen und erreicht so früher oder später die Schaltschwelle des Komparators CMP. Beispielhaft sind in Figur 8 ein Spannungsverlauf U1 dargestellt, der zum Zeitpunkt tv die Spannung des Referenzsignals REF erreicht, sowie zwei weitere Spannungsverläufe U2 mit schnellerer Aufladung des Kondensators C und U3 mit langsamerer Aufladung des Kondensators C.

Die in Figur 7 skizzierte Schaltung stellt somit eine analoge Verzögerungseinrichtung AV dar, mit der ein digitales Signal RESET zeitlich verzögert werden kann.

Allen Ausführungsbeispielen und Weiterbildungen der Erfindung ist gemeinsam, dass eine elektronische Kalibriereinrichtung zur Ausführung eines Kalibriervorgangs vorgesehen ist, wobei die Kalibriereinrichtung dazu ausgebildet ist, eine Verzögerungsleitung zu kontrollieren, um das Modulationssignal zeitverzögert an den Sender und/oder an die Auswerteeinrichtung weiterzuleiten. Insbesondere kann die Erfindung grundsätzlich sowohl bei kontinuierlich modulierten TOF-Sensoren (cwTOF oder Indirect TOF) als auch bei gepulsten Sensoren (direct TOF oder LiDAR) eingesetzt werden.

### Bezugszeichen:

- 1: Modulationseinrichtung
- 2: Empfänger / Pixelfeld
- 2': Auswerteeinrichtung
- 3: Verzögerungsleitung
- 4: Beleuchtungstreiber
- 5: Beleuchtung
- 6: Kalibriereinrichtung
- 7: ausgesandtes Licht
- 7': rückgestreutes Licht
- 8: Objekt
- 9: Kalibriervorrichtung
- 10: Kameravorrichtung
- 11: schaltbare Einheit
- 12: Eingang
- 13: Multiplexer
- 14: Ausgang
- 20: Schirm
- 21: Mantelfläche
- 22: Blende
- 23: PCB
- K: TOF-Kamera
- K1: TOF-Kamera
- K2: TOF-Kamera
- K3: TOF-Kamera
- KB: Kalibrierbox
- I: Schnittstelle
- OPT: Empfangsoptik
- T1, T2, ...TN: Verzögerungsstufen
- TMP: Temperatursensor
- TVL0, TVL1, TVL2, ...TVLN: Teilverzögerungsleitungen
- VL: Verzögerungsleitung
- Uc: Spannungssignal
- Ic: Stromquelle bzw. Stromstärke
- CMP: Komparator
- C: Kondensator
- REF: Referenzsignal / Referenzspannung
- RESET: Reset-Schalter
- OUT: Komparatorausgang
- t: Zeitachse
- t_{V}: Verzögerungszeit
- U1, U2, U3: jeweils verschiedene Spannungsverläufe beim Laden des Kondensators C
- AV: analoge Verzögerungseinrichtung

## Patentansprüche

1. Kalibriervorrichtung (9) zum Kalibrieren einer TOF-Kameravorrichtung (10) zur Aussendung von Lichtsignalen und Aufnahme des an einem Objekt rückgestreuten Lichts sowie zur Bestimmung der Entfernung der TOF-Kameravorrichtung (10) vom Objekt (8, 20), wobei die TOF-Kameravorrichtung umfasst:
• einen Sender (5) zur Aussendung von Lichtsignalen,
• einen Empfänger (2) zur Detektion des am Objekt (8, 20) rückgestreuten Lichts,
• eine Modulationseinrichtung (1) zur Erzeugung eines Modulationssignals, wobei die Modulationseinrichtung (1) mit dem Sender (5) verbunden ist, um auszusendende Lichtsignale zu modulieren,
• eine Auswerteeinrichtung (2') zur Auswertung des vom Empfänger (2) detektieren Lichts, welche mit der Modulationseinrichtung (1) verbunden ist, um das Modulationssignal zur Auswertung und Bestimmung der Entfernung zu erhalten,
**dadurch gekennzeichnet, dass** eine elektronische Kalibriereinrichtung (6) zur Ausführung eines Kalibriervorgangs vorgesehen ist, wobei die Kalibriereinrichtung (6) dazu ausgebildet ist, eine Verzögerungsleitung (VL) zu kontrollieren, um das Modulationssignal zeitverzögert an den Sender (5) und/oder an die Auswerteeinrichtung (2') weiterzuleiten.

2. Kalibriervorrichtung (9) nach einem der vorgenannten Ansprüche, **dadurch gekennzeichnet, dass** eine durch die Kalibriereinrichtung (6) kontrollierbare Verzögerungsleitung (VL) vorgesehen ist.

3. Kalibriervorrichtung (9) nach einem der vorgenannten Ansprüche, **dadurch gekennzeichnet, dass** die Kalibriereinrichtung (6) zur analogen oder digitalen Kontrolle der Verzögerungsleitung (VL) ausgebildet ist.

4. TOF-Kamera (K, K1, K2, K3) mit einer TOF-Kameravorrichtung (10) zur Aussendung von Lichtsignalen und Aufnahme des an einem Objekt (8, 20) rückgestreuten Lichts sowie zur Bestimmung der Entfernung der TOF-Kameravorrichtung (10) vom Objekt (8, 20), wobei die TOF-Kameravorrichtung (10) umfasst:
• einen Sender (5) zur Aussendung von Lichtsignalen,
• einen Empfänger (2) zur Detektion des am Objekt (8, 20) rückgestreuten Lichts,
• eine Modulationseinrichtung (1) zur Erzeugung eines Modulationssignals, wobei die Modulationseinrichtung (1) mit dem Sender (5) verbunden ist, um auszusendende Lichtsignale zu modulieren,
• eine Auswerteeinrichtung (2') zur Auswertung des vom Empfänger (2) detektieren Lichts, welche mit der Modulationseinrichtung (1) verbunden ist, um das Modulationssignal zur Auswertung und Bestimmung der Entfernung zu erhalten,
**dadurch gekennzeichnet, dass** eine Kalibriervorrichtung (9) nach einem der vorgenannten Ansprüche und eine durch die Kalibriereinrichtung (6) kontrollierbare Verzögerungsleitung (VL) vorgesehen sind.

5. TOF-Kamera (K, K1, K2, K3) nach einem der vorgenannten Ansprüche, **dadurch gekennzeichnet, dass** die Kalibriervorrichtung (9):
- in die TOF-Kameravorrichtung (10), insbesondere in ein Gehäuse der TOF-Kameravorrichtung (10) integriert ist und/oder
- als separate Baueinheit, insbesondere mit separatem Gehäuse, ausgebildet und lösbar mit der TOF-Kameravorrichtung (10) über eine Schnittstelle (I) verbindbar ist und/oder
- dass die TOF-Kameravorrichtung (10) zusammen mit der von der Kalibriereinrichtung (6) kontrollierbaren Verzögerungsleitung (VL) als eigene Baueinheit ausgebildet ist, die über eine Schnittstelle (I) mit der Kalibriereinrichtung (6) verbunden ist, wobei die Kalibriereinrichtung (6) als separate Baueinheit ausgebildet ist.

6. TOF-Kamera (K, K1, K2, K3) nach einem der vorgenannten Ansprüche, **dadurch gekennzeichnet, dass** der Empfänger eine Pixelmatrix umfasst.

7. TOF-Kamera (K, K1, K2, K3) nach einem der vorgenannten Ansprüche, **dadurch gekennzeichnet, dass** die Verzögerungsleitung (VL) wenigstens zwei in Serie geschaltete Teilverzögerungsleitungen (TVL1, TVL2, ... TVLN) aufweist und eine Auswahleinheit (13) vorgesehen ist, welche das Modulationssignal (1) am Ausgang jeder der Teilverzögerungsleitungen (TVL1, TVL2, ... TVLN) abgreift, sodass die mit der Auswahleinheit (2') verbundene Kalibriereinrichtung (6) zwischen verschieden zeitverzögerten Modulationssignalen (1) auswählen kann.

8. TOF-Kamera (K, K1, K2, K3) nach einem der vorgenannten Ansprüche, **dadurch gekennzeichnet, dass** die Teilverzögerungsleitungen (TVL0, TVL1, TVL2, ... TVLN) jeweils als digitale Puffer (T1, T2, ...TN) ausgebildet sind.

9. TOF-Kamera (K, K1, K2, K3) nach einem der vorgenannten Ansprüche, **dadurch gekennzeichnet, dass** die Verzögerungsleitung wenigstens einen digitalen Zähler, insbesondere mit einer Taktfrequenz von wenigstens zwei Gigahertz aufweist.

10. TOF-Kamera nach einem der vorgenannten Ansprüche, **dadurch gekennzeichnet, dass** die Verzögerungsleitung eine analoge Verzögerungseinrichtung (AV) aufweist.

11. TOF-Kamera (K, K1, K2, K3) nach einem der vorgenannten Ansprüche, **dadurch gekennzeichnet, dass** die Verzögerungsleitung (VL) zwischen die Modulationseinrichtung (1), insbesondere den Ausgang der Modulationseinrichtung, an dem das Modulationssignal (1) bereitgestellt werden kann, einerseits und den Sender (5), insbesondere den Eingang des Senders (5) zum Empfang des Modulationssignals, und/oder die Auswerteeinrichtung (2'), insbesondere den Eingang der Auswerteeinrichtung (2') zum Empfang des Modulationssignals, andererseits geschaltet ist.

12. TOF-Kamera (K, K1, K2, K3) nach einem der vorgenannten Ansprüche, **dadurch gekennzeichnet, dass** die Kalibriereinrichtung (9) eine Vergleichseinrichtung aufweist und mit der Auswerteeinrichtung (2') verbunden und/oder verbindbar ist, um die von der Auswerteeinrichtung (2') bestimmte Entfernung mit einer Referenzdistanz zu vergleichen und in Abhängigkeit vom Vergleich die Verzögerungsleitung (VL) zu kontrollieren, insbesondere die Zeitverzögerung der Weiterleitung des Modulationssignals einzustellen, bis die bestimmte Entfernung mit der Referenzdistanz übereinstimmt.

13. TOF-Kamera (K, K1, K2, K3) nach einem der vorgenannten Ansprüche, **dadurch gekennzeichnet, dass** die Kalibriereinrichtung (6) dazu ausgebildet ist, die Pixelmatrix (2) und/oder die von der Auswerteeinrichtung (2') je Pixel bestimmte Entfernung pixelweise auszulesen und mit der Referenzdistanz zu vergleichen, um jeden Pixel durch Vergleich der bestimmten Entfernung mit der Referenzdistanz abzugleichen und zu kalibrieren, insbesondere jedem Pixel die Referenzdistanz zuzuordnen.

14. TOF-Kamera (K, K1, K2, K3) nach einem der vorgenannten Ansprüche, **dadurch gekennzeichnet, dass** die Kalibriereinrichtung (6) und die Auswerteeinrichtung (2') zusammen in einer Baueinheit integriert sind.

15. TOF-Kamera (K, K1, K2, K3) nach einem der vorgenannten Ansprüche, **dadurch gekennzeichnet, dass** die TOF-Kameravorrichtung (10) als TOF-Kamerachip ausgebildet ist.

16. TOF-Kamera (K, K1, K2, K3) nach einem der vorgenannten Ansprüche, **dadurch gekennzeichnet dass** eine Empfangsoptik (OPT) vorgesehen ist.

17. TOF-Kamera (K, K1, K2, K3) nach einem der vorgenannten Ansprüche, **dadurch gekennzeichnet, dass** die Kalibriereinrichtung (6) eine Einrichtung zur Regelung der Temperatur umfasst und ein Temperatursensor vorgesehen ist, der insbesondere auf dem TOF-Kamerachip integriert ist, um die Temperatur des TOF-Kamerachips zu messen und diese an die Kalibriereinrichtung weiterzuleiten.
